# EUROPÄISCHE PATENTSCHRIFT

(11) **EP 3 465 265 B1**
(45) Veröffentlichungstag und Bekanntmachung des Hinweises auf die Patenterteilung: **27.11.2024**
(21) Anmeldenummer: 17726896.8
(22) Anmeldetag: 23.05.2017
(51) Int. Cl.: G01S 7/00, G01S 7/52, G01S 15/931

(54) **VERFAHREN ZUM BETREIBEN EINER ULTRASCHALLSENSORVORRICHTUNG EINES KRAFTFAHRZEUGS MIT ÜBERTRAGUNG VON KONFIGURATIONSDATEN, ULTRASCHALLSENSORVORRICHTUNG SOWIE KRAFTFAHRZEUG**
METHOD FOR OPERATING AN ULTRASONIC SENSOR DEVICE OF A MOTOR VEHICLE WITH THE TRANSMISSION OF CONFIGURATION DATA, ULTRASONIC SENSOR DEVICE AND MOTOR VEHICLE
PROCÉDÉ DE FONCTIONNEMENT D'UN DISPOSITIF DE DÉTECTION PAR ULTRASONS D'UN VÉHICULE AUTOMOBILE PAR TRANSMISSION DE DONNÉES DE CONFIGURATION, DISPOSITIF DE DÉTECTION PAR ULTRASONS AINSI QUE VÉHICULE AUTOMOBILE

(30) Priorität: 30.05.2016 DE 102016109848
(43) Veröffentlichungstag der Anmeldung: 10.04.2019
(73) Patentinhaber: Valeo Schalter und Sensoren GmbH, 74321 Bietigheim-Bissingen (DE)
(72) Erfinder: THUNERT, Fabian, 74321 Bietigheim-Bissingen (DE); HALLEK, Michael, 74321 Bietigheim-Bissingen (DE); JAYA, Akhil Dheerendra, 74321 Bietigheim-Bissingen (DE)
(74) Vertreter: Enge, Sebastian
(86) Internationale Anmeldenummer: PCT/EP2017/062341
(87) Internationale Veröffentlichungsnummer: WO 2017/207332

(56) Entgegenhaltungen:
- EP-A1- 1 624 319
- DE-A1- 102004 005 960
- DE-A1- 102007 026 688
- DE-A1- 102013 211 419

## Beschreibung

Die vorliegende Erfindung betrifft ein Verfahren zum Betreiben einer Ultraschallsensorvorrichtung eines Kraftfahrzeugs, bei welchem zur Erfassung einer Umgebung des Kraftfahrzeugs mittels einer Steuereinrichtung von einer Mehrzahl von Ultraschallsensoren Sensordaten empfangen werden und zum Konfigurieren der Ultraschallsensoren mittels der Steuereinrichtung Konfigurationsdaten an die jeweiligen Ultraschallsensoren übertragen werden. Darüber hinaus betrifft die vorliegende Erfindung eine Ultraschallsensorvorrichtung für ein Kraftfahrzeug. Schließlich betrifft die vorliegende Erfindung ein Kraftfahrzeug.

Das Interesse richtet sich vorliegend auf Ultraschallsensorvorrichtungen für Kraftfahrzeuge. Eine solche Ultraschallsensorvorrichtung kann eine Mehrzahl von Ultraschallsensoren umfassen, die beispielsweise verteilt an dem Kraftfahrzeug angeordnet sein können. Mit diesen Ultraschallsensoren können Sensordaten bereitgestellt werden, welche die Umgebung des Kraftfahrzeugs und insbesondere Objekte in der Umgebung des Kraftfahrzeugs beschreiben. Die Sensordaten, die mit den Ultraschallsensoren bereitgestellt werden, können mit Hilfe einer entsprechenden Steuereinrichtung ausgewertet werden. Damit können Objekte in der Umgebung des Kraftfahrzeugs erkannt werden und der Abstand zwischen dem Kraftfahrzeug und den jeweiligen Objekten bestimmt werden. Diese Informationen können dann dazu verwendet werden, um das Kraftfahrzeug kollisionsfrei an dem Objekt vorbei zu bewegen. Darüber hinaus können weitere kollisionsvermeidende Maßnahmen, beispielsweise eine Notbremsung, durchgeführt werden.

Mit Hilfe der Steuereinrichtung der Ultraschallsensorvorrichtung können die jeweiligen Ultraschallsensoren entsprechend konfiguriert werden. Dabei ist es bekannt, dass aktuelle Ultraschallsensoren entsprechende Schaltkreise bzw. Auswerteeinheiten enthalten, die eine gewisse Signalverarbeitung durchführen. Um diese Schaltkreise zu parametrisieren oder abfragen zu können, werden entsprechende Konfigurationsdaten an die Ultraschallsensoren gesendet. Mit Hilfe der Konfigurationsdaten können die jeweiligen Ultraschallsensoren an die Umgebungsbedingungen, wie beispielsweise die Temperatur oder die Luftfeuchtigkeit, angepasst werden.

Hierzu beschreibt die EP 1 624 319 A1 ein Verfahren zur Abstandsmessung eines sich in der Umgebung des Kraftfahrzeugs befindlichen Hindernisses mittels eines Echoverfahrens. Hierbei wird ein Sendesignal mittels einer am Kraftfahrzeug vorgesehenen Sensoreinrichtung ausgesendet und das von dem Hindernis reflektierte Echosignal mittels der Sensoreinrichtung empfangen. Dabei wird ein relatives Verhältnis zwischen der abstandsabhängigen Echoamplitude des Echosignals und einem die Detektion des empfangenen Echosignals bestimmenden Schwellwert der Sensoreinrichtung an die gemessenen Umgebungsbedingungen des Kraftfahrzeugs angepasst.

Die Übertragung der Konfigurationsdaten von der Steuereinrichtung zu den jeweiligen Ultraschallsensoren erfolgt dabei üblicherweise über ein langsames Übertragungsprotokoll. Ferner ist es üblicherweise vorgesehen, dass die Ultraschallsensoren nur eine Datenleitung aufweisen, sodass entweder nur die Konfigurationsdaten von der Steuereinrichtung zu dem Ultraschallsensor oder die Sensordaten von dem Ultraschallsensor zu der Steuereinrichtung übertragen werden können. Nachteilig ist hier, dass während der Übertragung der Konfigurationsdaten keine Objekte in der Umgebung des Kraftfahrzeugs erfasst werden können. Dies kann ferner dazu führen, dass beispielsweise keine Warnung ausgegeben werden kann, wenn der Abstand zwischen dem Kraftfahrzeug und dem Objekt einen Mindestabstand unterschreitet. Im schlimmsten Fall kann dies zu einer ungewollten Kollision zwischen dem Kraftfahrzeug und dem Objekt führen.

Um dieses Problem zu umgehen, werden in allen aktuellen Ultraschallsensorvorrichtungen die Konfigurationsdaten nur im Stillstand des Kraftfahrzeugs übertragen. Wenn die Ultraschallsensorvorrichtung im Bereich der Einparkhilfen eingesetzt wird, bringt dies nur einen geringen Nachteil mit sich, da meist zu Beginn eines Einparkvorgangs das Kraftfahrzeug angehalten wird, was die Konfiguration bzw. Neuprogrammierung der Ultraschallsensoren ermöglicht. Wenn die Ultraschallsensorvorrichtung für andere Anwendungen, beispielsweise zur Totwinkelüberwachung, eingesetzt werden, so ist es üblicherweise vorgesehen, dass die Ultraschallsensoren für eine lange zeitliche Dauer einsatzfähig sein sollen, ohne dass das Kraftfahrzeug zwischenzeitlich zum Stehen kommt. Insbesondere bei längeren Autobahnfahrten, bei dem sich Temperaturänderungen ergeben, ist eine Neukonfiguration bzw. Neuparametrisierung der Ultraschallsensoren notwendig.

Die DE 10 2013 211 419 A1 offenbart ein Verfahren zum Betreiben eines Ultraschallsensors, bei welchem ein Heizmodus genutzt wird, um die Temperatur der Membran über eine Vereisungstemperatur anzuheben.

Aus der DE 10 2004 005 960 A1 ist eine Ultraschallsensorvorrichtung bekannt, die eine Justiervorrichtung aufweist, zum automatischen Nachjustieren der Ultraschallsensorvorrichtung.

Aus der DE 10 2007 026 688 A1 ist ein Verfahren zu Funktionsprüfung eines Abstandsmesssystems bekannt, bei welchem zeitweise die Empfindlichkeit des Sensors zur Erfassung von Bodenreflektionen erhöht wird, und die erfassten Bodenreflektionen miteinander verglichen werden.

Es ist Aufgabe der vorliegenden Erfindung, eine Lösung aufzuzeigen wie eine Ultraschallsensorvorrichtung der eingangs genannten Art auf zuverlässige Weise konfiguriert werden kann, ohne dass ihre Funktion eingeschränkt wird.

Diese Aufgabe wird erfindungsgemäß durch ein Verfahren, durch eine Ultraschallsensorvorrichtung sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum Betreiben einer Ultraschallsensorvorrichtung eines Kraftfahrzeugs werden zur Erfassung einer Umgebung des Kraftfahrzeugs bevorzugt mittels einer Steuereinrichtung Sensordaten von einer Mehrzahl von Ultraschallsensoren empfangen. Darüber hinaus werden zum Konfigurieren der Ultraschallsensoren bevorzugt mittels der Steuereinrichtung Konfigurationsdaten an die jeweiligen Ultraschallsensoren übertragen. Des Weiteren ist es bevorzugt vorgesehen, dass für jeden der Ultraschallsensoren erkannt wird, ob sich der Ultraschallsensor in einem Erfassungsmodus, in welchem die Sensordaten des Ultraschallsensors für die Erfassung der Umgebung verwendet werden, oder in einem Nicht-Erfassungsmodus, in welchem die Sensordaten des Ultraschallsensors für die Erfassung der Umgebung unberücksichtigt bleiben, befindet. Dabei werden die Konfigurationsdaten an den jeweiligen Ultraschallsensor bevorzugt dann übertragen, falls sich dieser in dem Nicht-Erfassungsmodus befindet.

Ein erfindungsgemäßes Verfahren dient zum Betreiben einer Ultraschallsensorvorrichtung eines Kraftfahrzeugs. Dabei werden zur Erfassung einer Umgebung des Kraftfahrzeugs mittels einer Steuereinrichtung Sensordaten von einer Mehrzahl von Ultraschallsensoren empfangen. Des Weiteren werden zum Konfigurieren der Ultraschallsensoren mittels der Steuereinrichtung Konfigurationsdaten an die jeweiligen Ultraschallsensoren übertragen. Darüber hinaus wird für jeden der Ultraschallsensoren erkannt, ob sich der Ultraschallsensor in einem Erfassungsmodus, in welchem die Sensordaten des Ultraschallsensors für die Erfassung der Umgebung verwendet werden, oder in einem Nicht-Erfassungsmodus, in welchem die Sensordaten des Ultraschallsensors für die Erfassung der Umgebung unberücksichtigt bleiben, befindet, wobei die Konfigurationsdaten an den jeweiligen Ultraschallsensor übertragen werden, falls sich dieser in dem Nicht-Erfassungsmodus befindet.

Mit Hilfe des Verfahrens soll eine Ultraschallsensorvorrichtung eines Kraftfahrzeugs betrieben werden. Diese Ultraschallsensorvorrichtung kann eine Steuereinrichtung aufweisen, die beispielsweise durch ein elektronisches Steuergerät des Kraftfahrzeugs gebildet sein kann. Darüber hinaus kann die Ultraschallsensorvorrichtung eine Mehrzahl von Ultraschallsensoren aufweisen, die beispielsweise verteilt an dem Kraftfahrzeug angeordnet werden können. Mit Hilfe der Ultraschallsensorvorrichtung kann die Umgebung des Kraftfahrzeugs erfasst bzw. überwacht werden. Insbesondere können Objekte bzw. Hindernisse in der Umgebung des Kraftfahrzeugs erkannt werden. Hierzu können mit den jeweiligen Ultraschallsensoren Ultraschallsignale ausgesendet werden und die von dem Objekt reflektierten Ultraschallsignale wieder empfangen werden. Mit den jeweiligen Ultraschallsensoren kann ein Sensorsignal bereitgestellt werden, welches das von dem Objekt reflektierte Ultraschallsignal beschreibt. Auf Grundlage der Laufzeit zwischen dem Aussenden des Ultraschallsignals und dem Empfangen des von dem Objekt reflektierten Ultraschallsignals kann dann der Abstand zwischen dem Kraftfahrzeug und dem Objekt bestimmt werden.

Die Ultraschallsensorvorrichtung kann einen Fahrer des Kraftfahrzeugs dabei unterstützt, eine Kollision zwischen Kraftfahrzeug und dem Objekt zu vermeiden. Die Ultraschallsensorvorrichtung kann ein Fahrerassistenzsystem sein oder Teil eines Fahrerassistenzsystems sein. Beispielsweise kann die Ultraschallsensorvorrichtung eine entsprechende Warnung ausgeben, wenn ein Mindestabstand zwischen dem Kraftfahrzeug und dem Objekt unterschritten wird. Die Ultraschallsensorvorrichtung kann auch nach Art eines Totwinkelassistenten ausgebildet sein und an den Fahrer des Kraftfahrzeugs eine entsprechende Warnung ausgeben, falls sich ein Objekt bzw. ein weiteres Fahrzeug in dem toten Winkel des Kraftfahrzeugs befindet. Die Ultraschallsensorvorrichtung kann auch dazu dienen, einen entsprechenden Eingriff in die Lenkung und/oder die Bremsanlage durchzuführen. So kann beispielsweise eine Notbremsung durchgeführt werden, falls eine Kollision zwischen dem Kraftfahrzeug und dem Objekt droht.

Neben der Erkennung der Umgebung wird die Steuereinrichtung dazu verwendet, die jeweiligen Ultraschallsensoren zu konfigurieren bzw. einzustellen. Da sich die Dämpfungseigenschaften der Luft in der Umgebung, welche als übertragendes Medium für die Ultraschallsignale dient, deutlich von den Umgebungsbedingungen verändert, ist es erforderlich, die Ultraschallsensoren in Abhängigkeit von den Umgebungsbedingungen, insbesondere einer Temperatur und/oder Luftfeuchtigkeit, zu konfigurieren. Zu diesem Zweck können mit der Steuereinrichtung Konfigurationsdaten für die jeweiligen Ultraschallsensoren bestimmt werden und diese an die Ultraschallsensoren übertragen werden. Die jeweiligen Ultraschallsensoren können eine Auswerteeinheit bzw. einen elektronischen Schaltkreis aufweisen, welche zur Signalverarbeitung dient. Diese Auswerteeinheit kann nun die Konfigurationsdaten empfangen und die Einstellungen des Ultraschallsensors in Abhängigkeit von den empfangenen Konfigurationsdaten verändern.

Erfindungsgemäß ist es nun vorgesehen, dass überprüft wird, ob sich zumindest einer der Ultraschallsensoren in einem Erfassungsmodus oder in einem Nicht-Erfassungsmodus befindet. Der Erfassungsmodus beschreibt den Zustand des Ultraschallsensors, bei welchem die Sensordaten, die von dem Ultraschallsensor bereitgestellt werden, von der Steuereinrichtung verwendet werden, um die Umgebung des Kraftfahrzeugs zu erfassen bzw. zu überwachen. Im Gegensatz dazu beschreibt der Nicht-Erfassungsmodus denjenigen Zustand des Ultraschallsensors, bei welchem die Sensordaten des Ultraschallsensors bei der Erfassung der Umgebung von der Steuereinrichtung nicht berücksichtigt werden. Der Nicht-Erfassungsmodus beschreibt also einen Zustand, bei welchem die Sensordaten des Ultraschallsensors aktuell nicht benötigt werden. Der Nicht-Erfassungsmodus des Ultraschallsensors kann insbesondere einen Zustand beschreiben, bei dem durch die Sensorsignale des Ultraschallsensors keine weiteren Informationen zu der Umgebung des Kraftfahrzeugs und insbesondere zu einem Objekt in der Umgebung des Kraftfahrzeugs gewonnen werden können.

Wenn erkannt wird, dass sich zumindest einer der Ultraschallsensoren der Ultraschallsensorvorrichtung aktuell in dem Nicht-Erfassungsmodus befindet, werden die Konfigurationsdaten an diesen Ultraschallsensor übertragen. Während der Übertragung der Konfigurationsdaten von der Steuereinrichtung an den Ultraschallsensors können üblicherweise keine Sensordaten von dem Ultraschallsensor an die Steuereinrichtung übertragen werden. Wenn sich der Ultraschallsensor in dem Nicht-Erfassungsmodus befindet, besteht hier allerdings keine Gefahr, dass während der Übertragung der Konfigurationsdaten Objekte in der Umgebung, mit denen eine Kollision droht, nicht erfasst werden, da dieser Ultraschallsensor aktuell nicht benötigt wird, um die Umgebung zu erfassen bzw. Objekte zu detektieren. Mit anderen Worten werden die Konfigurationsdaten genau dann an den Ultraschallsensor übertragen, wenn dieser zur Umgebungserfassung bzw. Objekterkennung nicht benötigt wird. Somit können die Konfigurationsdaten beispielsweise nicht nur dann übertragen werden, wenn sich das Kraftfahrzeug im Stillstand befindet. Somit werden weitere Möglichkeiten vorgesehen, den Ultraschallsensor neu zu konfigurieren und somit an die jeweiligen Umgebungsbedingungen anzupassen.

Bevorzugt wird die Erkennung, ob sich der Ultraschallsensor in dem Erfassungsmodus und in den Nicht-Erfassungsmodus befindet, während einer Fahrt des Kraftfahrzeugs durchgeführt. Somit können nicht nur im Stillstand des Kraftfahrzeugs sondern auch während der Fahrt des Kraftfahrzeugs Situationen erkannt werden, bei denen zumindest einer der Ultraschallsensoren aktuell für die Objekterkennung nicht benötigt wird. Dies ermöglicht es insbesondere bei lang andauernden Fahrten in unterschiedlichen Temperaturbereichen, die Ultraschallsensoren entsprechend zu konfigurieren. Dies ermöglicht einen zuverlässigen Betrieb der Ultraschallsensoren in Abhängigkeit von den Umgebungsbedingungen.

Erfindungsgemäß ist vorgesehen, dass der Nicht-Erfassungsmodus während einer Ausgabe einer Warnung an einen Fahrer des Kraftfahrzeugs erkannt wird, wobei die Warnung in Folge des anhand der Sensordaten erkannten Objekts in der Umgebung ausgegeben wird. Wenn anhand der Sensordaten mittels der Steuereinrichtung erkannt wird, dass beispielsweise eine Kollision zwischen dem Kraftfahrzeug und dem Objekt drohen kann, kann mit der Ultraschallsensorvorrichtung eine entsprechende Warnung ausgegeben werden. Diese Warnung kann beispielsweise akustisch, optisch und/oder haptisch über eine entsprechende Ausgabeeinrichtung ausgegeben werden. Eine wesentliche Erkenntnis der vorliegenden Erfindung ist es, die zeitliche Dauer, während der vor dem Objekt gewarnt wird, zu nutzen, um die Ultraschallsensoren neu zu konfigurieren. Wenn mit Hilfe der Ultraschallsensorvorrichtung auf ein Objekt gewarnt wird, hat die Ultraschallsensorvorrichtung dieses Objekt bereits sicher erkannt. Wenn nun die neue Konfiguration der Ultraschallsensoren erfolgt, ergibt sich nicht die Gefahr, dass die Warnung nicht ausgelöst wird, da diese schon aktiv ist. In diesem Fall wird der Nicht-Erfassungsmodus des Ultraschallsensors erkannt, solange die Warnung ausgegeben wird.

Dabei wird insbesondere berücksichtigt, dass die zeitliche Dauer einer Warnung üblicherweise 0,5 Sekunden bis 1 Sekunde andauert. Die Übertragung der Konfigurationsdaten von der Steuereinrichtung an die Ultraschallsensoren beträgt üblicherweise eine zeitliche Dauer von wenigen Millisekunden und kann maximal 0,5 Sekunden andauern. Somit kann während dem Ausgeben der Warnung der Nicht-Erfassungsmodus für die Ultraschallsensoren angenommen werden und die Konfigurationsdaten übertragen werden. Falls die Warnung ausgegeben wird, kann es insbesondere vorgesehen sein, dass an alle Ultraschallsensoren der Ultraschallsensorvorrichtung die Konfigurationsdaten übertragen werden.

In einer weiteren Ausführungsform beschreibt die Warnung, dass sich das Objekt in einem toten Winkel des Kraftfahrzeugs befindet. Insbesondere wenn die Ultraschallsensorvorrichtung zur Überwachung des toten Winkels verwendet wird, eignet sich die Erkennung des Nicht-Erfassungsmodus und die Übertragung der Konfigurationsdaten während dieses Nicht-Erfassungsmodus. Wenn die Ultraschallsensorvorrichtung zur Totwinkelüberwachung verwendet wird oder Teil eines Fahrerassistenzsystems zu Totwinkelüberwachung ist, sind die Ultraschallsensoren für einen verhältnismäßig langen Zeitraum aktiv und es ist dabei erforderlich, die Ultraschallsensoren an die sich verändernden Umgebungsbedingungen anzupassen. Hierbei kann es insbesondere vorgesehen sein, dass die Konfigurationsdaten unmittelbar nach dem Erkennen des Nicht-Erfassungsmodus übertragen werden. Somit können die Konfigurationsdaten beispielsweise genau dann übertragen werden, wenn gerade ein Objekt in den toten Winkel eingetreten ist und die Warnung für eine vorbestimmte zeitliche Dauer aktiviert wurde.

In einer weiteren Ausführungsform beschreibt die Warnung, dass ein Abstand zwischen dem Kraftfahrzeug und dem Objekt einen vorbestimmten Mindestabstand unterschreitet. Dies eignet sich beispielsweise wenn die Ultraschallsensorvorrichtung zur Kollisionswarnung eingesetzt wird oder Teil eines Fahrassistenzsystems zur Kollisionswarnung ist. In diesem Fall kann der Nicht-Erfassungsmodus erkannt werden, wenn eine Warnung an den Fahrer ausgegeben wird bzw. wenn gerade eine Kollisionswarnung initiiert wurde. Somit können auch in diesem Fall die Ultraschallsensoren zuverlässig an die Umgebungsbedingungen angepasst werden.

In einer weiteren Ausgestaltung wird der Nicht-Erfassungsmodus bei einem Eingriff in eine Bremsanlage und/oder eine Lenkung des Kraftfahrzeugs erkannt. Beispielsweise kann es vorgesehen sein, dass der Nicht-Erfassungsmodus erkannt wird, falls mit einem Fahrerassistenzsystem des Kraftfahrzeugs oder die Ultraschallsensorvorrichtung eine Notbremsung eingeleitet wurde. Auch hier wird berücksichtigt, dass falls der Eingriff durchgeführt wird, das Objekt, in Folge dessen der Eingriff erfolgt, bereits erkannt wurde. Für die zeitliche Dauer des Eingriffs besteht keine Gefahr, dass der Eingriff nicht durchgeführt wird, da das Objekt anhand der Sensordaten nicht erkannt wurde. Somit kann auch in diesem Fall eine Neukonfiguration Ultraschallsensoren durchgeführt werden.

In einer weiteren Ausgestaltung wird eine bevorstehende Lenkbewegung des Kraftfahrzeugs erfasst und der Nicht-Erfassungsmodus wird erkannt, falls die bevorstehende Lenkbewegung in eine einem Erfassungsbereich des Ultraschallsensors abgewandte Richtung erfasst wird. Die bevorstehende Lenkbewegung kann beispielsweise durch eine Aktivierung eines Fahrtrichtungsanzeigers bzw. eines Blinkers erkannt werden. Hierzu kann die Ultraschallsensorvorrichtung ein entsprechendes Signal von einem Sensor empfangen, welcher die Aktivierung des Fahrtrichtungsanzeigers erfasst. Wenn beispielsweise der Blinker eine bestimmte Richtung gesetzt wird, so können die Ultraschallsensoren auf der Gegenseite neu konfiguriert werden. Dabei können insbesondere die Ultraschallsensoren neu konfiguriert werden, deren Einbauposition sich gegenüberliegend zu der bevorstehenden Lenkrichtung befindet. Beispielsweise können die Ultraschallsensoren auf der linken Seite des Kraftfahrzeugs neu konfiguriert werden, wenn erkannt wird, dass eine Lenkbewegung nach rechts erfolgen wird. Dabei wird berücksichtigt, dass es unwahrscheinlich ist, dass der Fahrer eine Objekterfassung bzw. Warnung auf einer Seite des Kraftfahrzeugs benötigt, wenn er in die andere bzw. entgegengesetzte Richtung fahren will.

In einer weiteren Ausgestaltung wird eine durchgeführte Lenkbewegung des Kraftfahrzeugs erfasst und der Nicht-Erfassungsmodus wird erkannt, falls die durchgeführte Lenkbewegung in eine dem Erfassungsbereich des Ultraschallsensors abgewandte Richtung erfasst wird. Zusätzlich zu der bevorstehenden Lenkbewegung kann auch eine aktuell durchgeführte oder begonnene Lenkbewegung erfasst werden. Hierzu kann die Steuereinrichtung beispielsweise entsprechende Daten von einem Lenkwinkelsensor oder einem Drehratensensor des Kraftfahrzeugs empfangen. Auch in diesem Fall können die Ultraschallsensoren auf der der Lenkbewegung abgewandten Seite neu konfiguriert werden.

Weiterhin ist es vorteilhaft, wenn eine aktuelle Bewegungsrichtung des Kraftfahrzeugs erfasst wird und der Nicht-Erfassungsmodus erkannt wird, falls die erfasste Bewegungsrichtung dem Erfassungsbereich des Ultraschallsensors abgewandt ist. Beispielsweise können bei einer Vorwärtsfahrt des Kraftfahrzeugs die Ultraschallsensoren, die an einem Heckbereich des Kraftfahrzeugs angeordnet sind, neu konfiguriert werden. Dabei kann es vorgesehen sein, dass die Ultraschallsensoren, deren Einbauposition auf einer der Fahrtrichtung abgewandten Seite angeordnet ist, neu konfiguriert werden. Hierbei kann es beispielsweise vorgesehen sein, dass diese Ultraschallsensoren gleichzeitig oder der Reihe nach neu konfiguriert werden.

In einer weiteren Ausgestaltung wird der Nicht-Erfassungsmodus erkannt, falls das Objekt mit zumindest einem weiteren Ultraschallsensor der Ultraschallsensorvorrichtung erfasst wird. Wenn beispielsweise das Objekt in der Umgebung des Kraftfahrzeugs mit mehreren Ultraschallsensoren des Kraftfahrzeugs erfasst wird, kann es vorgesehen sein, dass zumindest einer dieser Sensoren aktuell für die Erfassung dieses Objekts nicht verwendet wird und neu konfiguriert wird. Dies ist beispielsweise der Fall, wenn sich ein Objekt vor einem Stoßfänger des Kraftfahrzeugs befindet, in dem üblicherweise mehrere Ultraschallsensoren nebeneinander angeordnet sind. Ferner kann berücksichtigt werden, dass die Ultraschallsensoren typischerweise nicht gleichzeitig angesteuert werden, sondern einzeln oder in logischen Gruppen. In Pausen, in denen die Sensoren weder Ultraschallsignale aussenden noch reflektierte Ultraschallsignale empfangen, können diese neu konfiguriert werden.

Weiterhin ist es vorteilhaft, wenn die Konfigurationsdaten mittels der Steuereinrichtung in Abhängigkeit von einer aktuellen Temperatur und/oder einer Luftfeuchtigkeit in der Umgebung des Kraftfahrzeugs bestimmt werden. Beispielsweise kann die Steuereinrichtung entsprechende Daten eines Temperatursensors und eines Luftfeuchtigkeitssensors erfassen und hieraus die Konfigurationsdaten für die Ultraschallsensoren bestimmen. Diese Konfigurationsdaten können dann an die Ultraschallsensoren übertragen werden, um deren Betrieb an Temperatur und/oder Luftfeuchtigkeit bzw. die daraus resultierende Luftschalldämpfung anzupassen. Auf Grundlage der Konfigurationsdaten können entsprechende Schwellwertkurven in den Ultraschallsensoren bzw. deren Auswerteeinheiten angepasst werden. Zudem kann die Empfindlichkeit der Ultraschallsensoren in Abhängigkeit von den Konfigurationsdaten angepasst werden.

Eine erfindungsgemäße Ultraschallsensorvorrichtung für ein Kraftfahrzeug ist zum Durchführen eines erfindungsgemäßen Verfahrens und vorteilhafter Ausführungsformen davon ausgelegt. Die Ultraschallsensorvorrichtung kann eine Steuereinrichtung und eine Mehrzahl von Ultraschallsensoren umfassen. Die Ultraschallsensorvorrichtung kann ferner entsprechende Sensoren zur Erfassung der Temperatur und/oder Luftfeuchtigkeit in der Umgebung umfassen. Des Weiteren kann die Ultraschallsensorvorrichtung eine Ausgabeeinheit zum Ausgeben einer Warnung aufweisen. Ferner kann die Ultraschallsensorvorrichtung entsprechende Sensoren zum Erfassen einer Bewegung, einer Geschwindigkeit, einer Fahrtrichtung, einer Aktivierung des Fahrtrichtungsanzeigers und/oder einer Lenkbewegung des Kraftfahrzeugs aufweisen.

Ein erfindungsgemäßes Kraftfahrzeug umfasst eine erfindungsgemäße Ultraschallsensorvorrichtung. Das Kraftfahrzeug ist insbesondere als Personenkraftwagen ausgebildet.

Die mit Bezug auf das erfindungsgemäße Verfahren vorgestellten bevorzugten Ausführungsform und deren Vorteile gelten entsprechend für die erfindungsgemäße Ultraschallsensorvorrichtung sowie das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches eine Ultraschallsensorvorrichtung aufweist
- Fig. 2: eine erste Verkehrssituation, bei welcher sich eine weiteres Kraftfahrzeug in einem toten Winkel des Kraftfahrzeugs befindet; und
- Fig. 3: eine weitere Verkehrssituation, bei welcher das Kraftfahrzeug rechts abbiegt.

In den Figuren werden gleiche und funktionsgleiche Elemente mit den gleichen Bezugszeichen versehen.

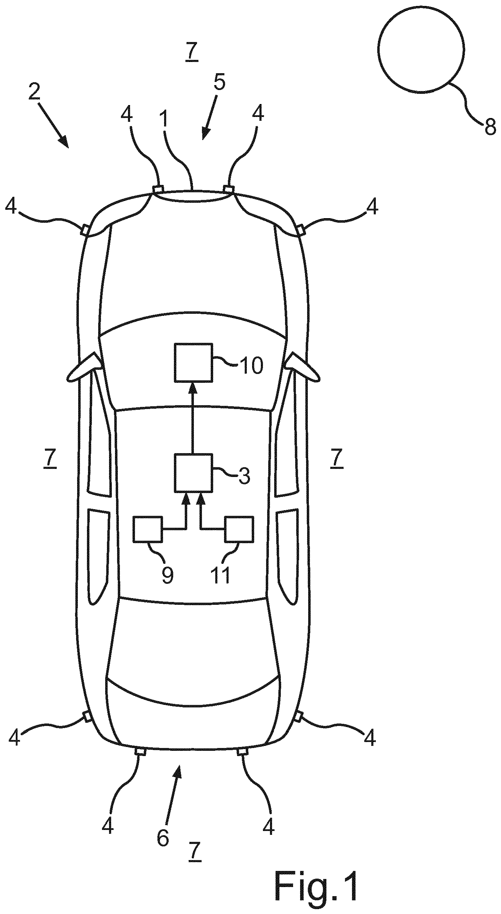

Fig. 1 zeigt ein Kraftfahrzeug 1 gemäß einer Ausführungsform der vorliegenden Erfindung einer Draufsicht. Das Kraftfahrzeug 1 ist vorliegend als Personenkraftwagen ausgebildet. Das Kraftfahrzeug 1 umfasst eine Ultraschallsensorvorrichtung 2. Die Ultraschallsensorvorrichtung 2 umfasst eine Steuereinrichtung 3, die beispielsweise durch ein elektronisches Steuergerät (ECU - Electronic Control Unit) des Kraftfahrzeugs 1 gebildet sein kann. Darüber hinaus umfasst die Ultraschallsensorvorrichtung 2 eine Mehrzahl von Ultraschallsensoren 4.

In dem vorliegenden Ausführungsbeispiel umfasst die Ultraschallsensorvorrichtung 2 acht Ultraschallsensoren 4, wobei vier Ultraschallsensoren 4 im Frontbereich 5 und vier Ultraschallsensoren 4 in einem Heckbereich 6 des Kraftfahrzeugs 1 angeordnet sind. Mit den jeweiligen Ultraschallsensoren 4 kann ein Ultraschallsignal ausgesendet werden, und das von einem Objekt 8 in einer Umgebung 7 des Kraftfahrzeugs 1 reflektierte Ultraschallsignal wieder empfangen werden. Auf Grundlage des von dem Objekt 8 reflektierten Ultraschallsignals können die jeweiligen Ultraschallsensoren 4 ein Sensorsignal bestimmen. Die jeweiligen Ultraschallsensoren 4 können ferner eine Auswerteeinheit aufweisen, mit denen die Sensorsignale erzeugt werden können. Die Auswerteeinheit der jeweiligen Sensoren kann beispielsweise ein Sensorrohsignal, das auf Grundlage des empfangenen Ultraschallsignals bestimmt wird, mit einem Schwellenwert vergleichen. Somit können beispielsweise als das Sensorsignal nur Anteile des Sensorrohsignals berücksichtigt werden, welche über diesen Schwellenwert liegen.

Die Steuereinrichtung 3 ist zur Datenübertragung mit den jeweiligen Ultraschallsensoren 4 verbunden. Jeweilige Datenleitungen sind vorliegend der Übersichtlichkeit halber nicht gezeigt. Dabei sind die jeweiligen Datenleitungen insbesondere als Eindrahtleitungen oder als serielle Datenleitungen ausgebildet. Dies bedeutet, dass Daten entweder nur von der Steuereinrichtung 3 zu einem Ultraschallsensor 4 oder von einem Ultraschallsensor 4 zu der Steuereinrichtung 3 übertragen werden können. Die Steuereinrichtung 3 kann die jeweiligen Sensordaten der Ultraschallsensoren 4 empfangen und diese zur Erfassung der Umgebung 7 des Kraftfahrzeugs 1 auswerten. Auf Grundlage der Sensordaten kann dann beispielsweise das Objekt 8 in der Umgebung 7 erkannt werden und die relative Lage zwischen dem Kraftfahrzeug 1 und dem Objekt 8 bestimmt werden.

Die Ultraschallsensorvorrichtung 2 umfasst ferner einen Umgebungssensor 9, mit dem die aktuelle Temperatur und/oder die aktuelle Luftfeuchtigkeit in der Umgebung 7 erfasst werden kann. Die aktuelle Temperatur und/oder die aktuelle Luftfeuchtigkeit wirkt sich deutlich auf die Luftschalldämpfung der Luft in der Umgebung 7 aus, über welche die Ultraschallsignale übertragen werden. In Abhängigkeit von der aktuellen Temperatur und/oder Luftfeuchtigkeit in der Umgebung 7 kann dann die Steuereinrichtung 3 Konfigurationsdaten zum Konfigurieren der Ultraschallsensoren 4 bestimmen. Diese Konfigurationsdaten können dann an die Ultraschallsensoren 4 übertragen werden. Nachdem die Ultraschallsensoren 4 die Konfigurationsdaten empfangen haben, können die Einstellungen der Ultraschallsensoren 4 bzw. deren Auswerteeinheit hat angepasst werden. Beispielsweise kann die Schwellwertkurve angepasst werden.

Die Ultraschallsensorvorrichtung 2 umfasst ferner eine Ausgabeeinheit 10, mittels welcher eine Warnung an einen Fahrer des Kraftfahrzeugs 1 ausgegeben werden kann. Diese Warnung kann beispielsweise akustisch, optisch und/oder haptisch erfolgen. Diese Warnung kann beispielsweise ausgegeben werden, wenn erkannt wird, dass der Abstand zwischen dem Kraftfahrzeug 1 und dem Objekt 8, der auf Grundlage der Sensordaten bestimmt wurde, einen vorbestimmten Mindestabstand unterschreitet und somit eine Kollision zwischen dem Kraftfahrzeug 1 und dem Objekt 8 droht. Die Warnung kann auch ausgegeben werden, wenn anhand der Sensordaten der Ultraschallsensoren 4 erkannt wird, dass sich ein Objekt 8 bzw. ein weiteres Kraftfahrzeug 14 in einem toten Winkel des Kraftfahrzeugs 1 befinden.

Die Steuereinrichtung 3 ist nun dazu ausgebildet, zu erkennen, ob sich zumindest einer der Ultraschallsensoren 4 in einem Erfassungsmodus oder in einem Nicht-Erfassungsmodus befindet. In dem Erfassungsmodus nutzt die Steuereinrichtung 3 die Sensordaten des Ultraschallsensors für die Erfassung der Umgebung 7 bzw. zur Erkennung des Objekts 8. Wenn sich der Ultraschallsensor 4 in dem Erfassungsmodus befindet, können die Sensordaten dieses Ultraschallsensors 4 auch zur Ausgabe der Warnung herangezogen werden. Wenn sich der Ultraschallsensor 4 aber in dem Nicht-Erfassungsmodus befindet, werden die Sensordaten dieses Ultraschallsensors 4 zur Erfassung der Umgebung 7, der Erkennung des Objekts 8 und/oder der Ausgabe der Warnung von der Steuereinrichtung 3 nicht benötigt. Der Nicht-Erfassungsmodus des jeweiligen Ultraschallsensors 4 kann sich beispielsweise in Abhängigkeit von einer Fahrsituation des Kraftfahrzeugs und/oder einer Verkehrssituation, in der sich das Kraftfahrzeug 1 befindet, ergeben.

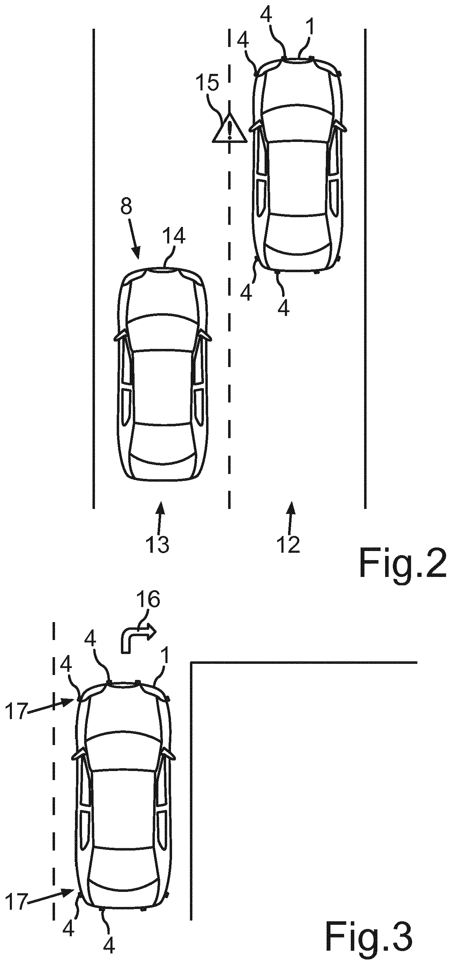

Fig. 2 zeigt eine Verkehrssituation, bei welcher das Kraftfahrzeug 1 auf einer ersten Fahrspur 12 bewegt wird. Auf einer benachbarten Fahrspur 13 befindet sich als das Objekt 8 ein weiteres Kraftfahrzeug 14. Vorliegend befindet sich das Objekt 8 bzw. das weitere Kraftfahrzeug 14 in einem toten Winkel des Kraftfahrzeugs 1. Dabei wird das weitere Kraftfahrzeug 14 mit Hilfe der Sensordaten der Ultraschallsensoren 4 von der Steuereinrichtung erkannt. Ferner wird die Ausgabeeinrichtung 10 von der Steuereinrichtung 3 zum Ausgeben einer Warnung an den Fahrer des Kraftfahrzeugs 1 angesteuert. Diese Warnung, welche vorliegend durch das Symbol 15 veranschaulicht ist, weist den Fahrer des Kraftfahrzeugs 1 darauf hin, dass sich ein Fahrzeug in dem toten Winkel befindet. Während der Ausgabe dieser Warnung kann der Nicht-Erfassungsmodus für die Ultraschallsensoren 4 des Kraftfahrzeugs 1 erkannt werden. Hier kann davon ausgegangen werden, dass das Objekt 8 bzw. das weitere Kraftfahrzeug 14 bereits erfasst und vor diesem gewarnt wurde. In diesem Fall kann eine neue Konfiguration der Ultraschallsensoren 4 durchgeführt werden, bei welcher die Konfigurationsdaten von der Steuereinrichtung 3 an die jeweiligen Ultraschallsensoren 4 übertragen werden.

Die Ultraschallsensorvorrichtung 2 umfasst ferner einen Sensor 11, welcher mit der Steuereinrichtung 3 zur Datenübertragung verbunden ist. Mit dem Sensor 11 kann beispielsweise eine aktuelle Fahrtrichtung, eine Lenkbewegung und/oder eine Betätigung eines Fahrtrichtungsanzeigers erkannt werden kann. Grundsätzlich können anstelle des Sensors 11 auch mehrere einzelne Sensoren verwendet werden. Diese Daten des Sensors 11 können von der Steuereinrichtung 3 ferner verwendet werden, um den Nicht-Erfassungsmodus zumindest eines der Ultraschallsensoren 4 zu erkennen. Dies ist beispielhaft anhand von Fig. 3 erläutert.

Fig. 3 zeigt schematisch eine weitere Verkehrssituation, in welcher sich das Kraftfahrzeug 1 befindet. Dabei wird mit dem Kraftfahrzeug 1 ein Abbiegemanöver nach rechts durchgeführt. Dies ist vorliegend schematisch durch den Pfeil 16 veranschaulicht. Das Abbiegemanöver bzw. die Lenkbewegung des Kraftfahrzeugs 1 kann im Voraus mit Hilfe des Sensors 11 anhand einer Betätigung des Fahrtrichtungsanzeigers erkannt werden. Alternativ kann die Lenkbewegung erkannt werden, sobald diese begonnen wird bzw. durchgeführt wird. So können die Daten des Sensors 11 herangezogen werden, welche die Lenkbewegung bzw. den Lenkwinkel beschreiben. Wenn eine Lenkbewegung bevorsteht oder durchgeführt können die Ultraschallsensoren 4, deren Einbauposition auf einer der Lenkbewegung gegenüberliegenden Seite angeordnet ist, neu konfiguriert werden. Vorliegend soll das Kraftfahrzeug 1 nach rechts gelenkt werden. Dabei können die Ultraschallsensoren 4, die auf einer linken Seite des Kraftfahrzeugs 1 angeordnet sind, neu konfiguriert werden. Diese Ultraschallsensoren 4 sind vorliegend durch die Pfeile 17 gekennzeichnet. Diese Ultraschallsensoren 4 befinden sich in dem Nicht-Erfassungsmodus.

Insgesamt wird es somit ermöglicht, die Ultraschallsensoren 4 auch während der Fahrt des Kraftfahrzeugs 1 zu konfigurieren. Es ist nicht mehr erforderlich, abzuwarten, bis sich das Kraftfahrzeug 1 im Stillstand befindet und dann dien Konfigurationsdaten zu den Ultraschallsensoren 4 zu übertragen. Damit können die Ultraschallsensoren 4 an die Bedingungen in der Umgebung 7 angepasst werden und gleichzeitig ein sicherer Betrieb des Kraftfahrzeugs 1 garantiert werden.

## Patentansprüche

1. Verfahren zum Betreiben einer Ultraschallsensorvorrichtung (2) eines Kraftfahrzeugs (1), bei welchem zur Erfassung einer Umgebung (7) des Kraftfahrzeugs (1) mittels einer Steuereinrichtung (3) von einer Mehrzahl von Ultraschallsensoren (4) Sensordaten empfangen werden und zum Konfigurieren der Ultraschallsensoren (4) mittels der Steuereinrichtung (3) Konfigurationsdaten an die jeweiligen Ultraschallsensoren (4) übertragen werden,
wobei für jeden der Ultraschallsensoren (4) erkannt wird, ob sich der Ultraschallsensor (4) in einem Erfassungsmodus, in welchem die Sensordaten des Ultraschallsensors (4) für die Erfassung der Umgebung (7) verwendet werden, oder in einem Nicht-Erfassungsmodus, in welchem die Sensordaten des Ultraschallsensors (4) für die Erfassung der Umgebung (7) unberücksichtigt bleiben, befindet, wobei die Konfigurationsdaten an den jeweiligen Ultraschallsensor (4) übertragen werden, falls sich dieser in dem Nicht-Erfassungsmodus befindet, **dadurch gekennzeichnet, dass**
der Nicht-Erfassungsmodus während einer Ausgabe einer Warnung an einen Fahrer des Kraftfahrzeugs (1) erkannt wird, wobei die Warnung in Folge eines anhand der Sensordaten erkannten Objekts (8) in der Umgebung (7) ausgegeben wird.

2. Verfahren nach Anspruch 1,
**dadurch gekennzeichnet, dass**
die Erkennung, ob sich der Ultraschallsensor (4) in dem Erfassungsmodus oder in dem Nicht-Erfassungsmodus befindet, während einer Fahrt des Kraftfahrzeugs (1) durchgeführt wird.

3. Verfahren nach Anspruch 1 oder 2,
**dadurch gekennzeichnet, dass**
die Warnung beschreibt, dass sich das Objekt (8) in einem toten Winkel des Kraftfahrzeugs (1) befindet.

4. Verfahren nach Anspruch 1 oder 2,
**dadurch gekennzeichnet, dass**
die Warnung beschreibt, dass ein Abstand zwischen dem Kraftfahrzeug (1) und dem Objekt (8) einen vorbestimmten Mindestabstand unterschreitet.

5. Verfahren nach einem der vorhergehenden Ansprüche, wobei der Nicht-Erfassungsmodus bei einem Eingriff in eine Bremsanlage und/oder eine Lenkung des Kraftfahrzeugs (1) erkannt wird.

6. Verfahren nach einem der vorhergehenden Ansprüche,
**dadurch gekennzeichnet, dass**
eine bevorstehende Lenkbewegung des Kraftfahrzeugs (1) erfasst wird und der Nicht-Erfassungsmodus erkannt wird, falls die bevorstehende Lenkbewegung in eine einem Erfassungsbereich des Ultraschallsensors (4) abgewandte Richtung erfasst wird.

7. Verfahren nach einem der vorhergehenden Ansprüche,
**dadurch gekennzeichnet, dass**
eine durchgeführte Lenkbewegung des Kraftfahrzeugs (1) erfasst wird und der Nicht-Erfassungsmodus erkannt wird, falls die durchgeführte Lenkbewegung in eine dem Erfassungsbereich des Ultraschallsensors (4) abgewandte Richtung erfasst wird.

8. Verfahren nach einem der vorhergehenden Ansprüche,
**dadurch gekennzeichnet, dass**
eine aktuelle Bewegungsrichtung des Kraftfahrzeugs (1) erfasst wird und der Nicht-Erfassungsmodus erkannt wird, falls die erfasste Bewegungsrichtung dem Erfassungsbereich des Ultraschallsensors (4) abgewandt ist.

9. Verfahren nach einem der vorhergehenden Ansprüche,
**dadurch gekennzeichnet, dass**
der Nicht-Erfassungsmodus erkannt wird, falls das Objekt (8) mit zumindest einem weiteren Ultraschallsensor (4) der Ultraschallsensorvorrichtung (2) erfasst wird.

10. Verfahren nach einem der vorhergehenden Ansprüche, wobei die Konfigurationsdaten mittels der Steuereinrichtung (3) in Abhängigkeit von einer aktuellen Temperatur und/oder einer Luftfeuchtigkeit in einer Umgebung (7) des Kraftfahrzeugs (1) bestimmt werden.

11. Ultraschallsensorvorrichtung (2) für ein Kraftfahrzeug (1), welche zum Durchführen eines Verfahrens nach einem der vorhergehenden Ansprüche ausgebildet ist.

12. Kraftfahrzeug (1) mit einer Ultraschallsensorvorrichtung (2) nach Anspruch 11.

## Claims

1. Method for operating an ultrasonic sensor apparatus (2) of a motor vehicle (1), in which, in order to capture an environment (7) of the motor vehicle (1), sensor data are received from a plurality of ultrasonic sensors (4) by means of a control device (3), and, in order to configure the ultrasonic sensors (4), configuration data are transmitted to the respective ultrasonic sensors (4) by means of the control device (3),
wherein, for each of the ultrasonic sensors (4), it is detected whether the ultrasonic sensor (4) is in a capture mode, in which the sensor data from the ultrasonic sensor (4) are used to capture the environment (7), or in a non-capture mode, in which the sensor data from the ultrasonic sensor (4) are disregarded for capturing the environment (7), wherein the configuration data are transmitted to the respective ultrasonic sensor (4) if it is in the non-capture mode, **characterized in that**
the non-capture mode is detected while outputting a warning to a driver of the motor vehicle (1), wherein the warning is output as a result of an object (8) detected in the environment (7) on the basis of the sensor data.

2. Method according to Claim 1,
**characterized in that**
the detection as to whether the ultrasonic sensor (4) is in the capture mode or in the non-capture mode is carried out during a journey of the motor vehicle (1).

3. Method according to Claim 1 or 2,
**characterized in that**
the warning describes that the object (8) is in a blind spot of the motor vehicle (1).

4. Method according to Claim 1 or 2,
**characterized in that**
the warning describes that a distance between the motor vehicle (1) and the object (8) falls below a predetermined minimum distance.

5. Method according to one of the preceding claims, wherein the non-capture mode is detected during intervention in a brake system and/or a steering system of the motor vehicle (1).

6. Method according to one of the preceding claims, **characterized in that**
an imminent steering movement of the motor vehicle (1) is captured and the non-capture mode is detected if the imminent steering movement is captured in a direction facing away from a capture region of the ultrasonic sensor (4).

7. Method according to one of the preceding claims, **characterized in that**
a performed steering movement of the motor vehicle (1) is captured and the non-capture mode is detected if the performed steering movement is captured in a direction facing away from the capture region of the ultrasonic sensor (4).

8. Method according to one of the preceding claims, **characterized in that**
a current direction of movement of the motor vehicle (1) is captured and the non-capture mode is detected if the captured direction of movement faces away from the capture region of the ultrasonic sensor (4).

9. Method according to one of the preceding claims, **characterized in that**
the non-capture mode is detected if the object (8) is captured using at least one further ultrasonic sensor (4) of the ultrasonic sensor apparatus (2).

10. Method according to one of the preceding claims, wherein the configuration data are determined by means of the control device (3) on the basis of a current temperature and/or a humidity in an environment (7) of the motor vehicle (1).

11. Ultrasonic sensor apparatus (2) for a motor vehicle (1), which is designed to carry out a method according to one of the preceding claims.

12. Motor vehicle (1) having an ultrasonic sensor apparatus (2) according to Claim 11.

## Revendications

1. Procédé pour faire fonctionner un arrangement de capteurs à ultrasons (2) d'un véhicule automobile (1), avec lequel, pour la détection d'un environnement (7) du véhicule automobile (1) au moyen d'un dispositif de commande (3), des données de capteur sont reçues en provenance d'une pluralité de capteurs à ultrasons (4) et, pour la configuration des capteurs à ultrasons (4), des données de configuration sont transmises aux capteurs à ultrasons (4) respectifs au moyen du dispositif de commande (3),
une reconnaissance étant effectuée pour chacun des capteurs à ultrasons (4) afin de savoir si le capteur à ultrasons (4) se trouve dans un mode de détection, dans lequel les données de capteur du capteur à ultrasons (4) sont utilisées pour la détection de l'environnement (7), ou dans un mode de non-détection, dans lequel les données du capteur à ultrasons (4) restent ignorées pour la détection de l'environnement (7), les données de configuration étant transmises au capteur à ultrasons (4) respectif dans le cas où celui-ci se trouve dans le mode de non-détection, **caractérisé en ce que**
le mode de non-détection est reconnu pendant une émission d'un avertissement à un conducteur du véhicule automobile (1), l'avertissement étant émis consécutivement à un objet (8) détecté dans l'environnement (7) à l'aide des données du capteur.

2. Procédé selon la revendication 1,
**caractérisé en ce que**
la reconnaissance du fait que le capteur à ultrasons (4) se trouve dans le mode de détection ou dans le mode de non-détection est effectuée pendant un déplacement du véhicule automobile (1).

3. Procédé selon la revendication 1 ou 2,
**caractérisé en ce que**
l'avertissement décrit que l'objet (8) se trouve dans un angle mort du véhicule automobile (1).

4. Procédé selon la revendication 1 ou 2,
**caractérisé en ce que**
l'avertissement décrit qu'une distance entre le véhicule automobile (1) et l'objet (8) est inférieure à une distance minimale prédéterminée.

5. Procédé selon l'une quelconque des revendications précédentes,
le mode de non-détection étant reconnu lors d'une intervention dans un système de freinage et/ou une direction du véhicule automobile (1).

6. Procédé selon l'une quelconque des revendications précédentes,
**caractérisé en ce que**
un mouvement de direction imminent du véhicule automobile (1) est détecté et le mode de non-détection est reconnu dans le cas où le mouvement de direction imminent est détecté dans une direction opposée à une zone de détection du capteur à ultrasons (4).

7. Procédé selon l'une quelconque des revendications précédentes,
**caractérisé en ce que**
un mouvement de direction effectué du véhicule automobile (1) est détecté et le mode de non-détection est reconnu dans le cas où le mouvement de direction effectué est détecté dans une direction opposée à la zone de détection du capteur à ultrasons (4).

8. Procédé selon l'une quelconque des revendications précédentes,
**caractérisé en ce que**
une direction de mouvement actuelle du véhicule automobile (1) est détectée et le mode de non-détection est reconnu dans le cas où la direction de mouvement détectée est opposée à la zone de détection du capteur à ultrasons (4).

9. Procédé selon l'une quelconque des revendications précédentes,
**caractérisé en ce que**
le mode de non-détection est détecté dans le cas où l'objet (8) est détecté par au moins un capteur à ultrasons (4) supplémentaire de l'arrangement de capteurs à ultrasons (2).

10. Procédé selon l'une quelconque des revendications précédentes,
les données de configuration étant déterminées au moyen du dispositif de commande (3) en fonction d'une température actuelle et/ou d'une humidité de l'air dans un environnement (7) du véhicule automobile (1).

11. Arrangement de capteurs à ultrasons (2) pour un véhicule automobile (1), lequel est configuré conçu pour mettre en œuvre un procédé selon l'une des revendications précédentes.

12. Véhicule automobile (1) comprenant un arrangement de capteurs à ultrasons (2) selon la revendication 11.
